# EUROPÄISCHE PATENTSCHRIFT

(11) **EP 2 200 801 B1**
(45) Veröffentlichungstag und Bekanntmachung des Hinweises auf die Patenterteilung: **28.03.2012**
(21) Anmeldenummer: 08805133.9
(22) Anmeldetag: 17.10.2008
(51) Int. Cl.: B29C 45/28, B29C 67/24, B29C 45/73

(54) **FORMWERKZEUG MIT INTEGRIERTEM INJEKTOR**
MOULD COMPRISING AN INTEGRATED INJECTOR
MOULE À INJECTEUR INTÉGRÉ

(30) Priorität: 18.10.2007 DE 102007050332
(43) Veröffentlichungstag der Anmeldung: 30.06.2010
(60) Teilanmeldung: 10161303.2
(73) Patentinhaber: KraussMaffei Technologies GmbH, 80997 München (DE)
(72) Erfinder: SÖCHTIG, Wolfgang, verstorben (DE)
(74) Vertreter: Wilhelm, Ludwig
(86) Internationale Anmeldenummer: PCT/EP2008/063444
(87) Internationale Veröffentlichungsnummer: WO 2009/050082

(56) Entgegenhaltungen:
- EP-A- 0 108 287
- WO-A-94/23924
- DE-A1-102005 007 979
- JP-A- 59 014 932

## Beschreibung

Die vorliegende Erfindung betrifft ein Formwerkzeug gemäß dem Oberbegriff des Anspruchs 1.

Seit langem ist es bekannt, Kavitäten von Spritzgießformen mittels eines Einspritzprozesses mit einem Thermoplastmaterial zu füllen. Seit einiger Zeit ist es überdies bekannt, Kavitäten von geschlossenen Formwerkzeugen durch Injektion von niedriger viskosen Materialien, beispielsweise Polyurethan, zu füllen, um so Oberflächen, Dekore oder Häute herzustellen.

In einer bekannten Ausführungsform wird ein beispielsweise aus einem Thermoplastmaterial bestehendes Trägerelement in eine vergrößerte Kavität eingelegt, so dass zwischen dem Trägerelement und einer Kavitätswand noch ein gegenüber der Außenumgebung abgeschlossener Freiraum verbleibt. Wird in diesem Raum ein niedrig viskoses Material eingebracht und die Kavität vollständig gefüllt, so entsteht durch diesen Überflutungsprozess eine Beschichtung des Trägerbauteils. Solche Überflutungsprozesse sind ebenfalls aus dem Stand der Technik bekannt. Bei der Verwendung von Polyurethan als Überflutungsmaterial werden dabei Mischköpfe verwendet, in denen die reaktiven Ausgangsmaterialien Polyol und Isocyanat vor dem Injizieren miteinander vermischt werden. Der jeweilige Mischkopf wird an das Formwerkzeug bzw. die Einbringöffnung unmittelbar angedockt, und durch den Mischkopf wird das reaktive Gemisch in den Kavitätsraum eingebracht.

Aus der WO 94/23924 ist ein Verfahren und eine Vorrichtung zur Herstellung eines Kunststoffproduktes mit einem flüssigen Ausgangsprodukt bekannt, wobei eine Einspritzvorrichtung ein flüssiges, aushärtbares Kunststoffprodukt in eine geschlossene Form einspritzt. Das flüssige Ausgangsprodukt wird einer über einen Kolben öffen- und verschließbaren Austragsöffnung zugeführt. Falls die Austragsöffnung verschlossen ist, wird der Zuführkanal mit einem Rücklaufkanal verbunden.

In der DE 10 2005 007 979 A1 ist ein Mischkopf für ein hochviskoses Ausgangsmaterial beschrieben. Einer Mischkammer wird das hochviskose Ausgangsmaterial zugeführt und stromabwärts eine weitere reaktive Komponente über Düsen eingespritzt. Mittels eines verschieblichen Kolbens kann die Zufuhr für das hochviskose Ausgangsmaterial einerseits mit der Mischkammer andererseits mit einem Rückflusskanal verbunden werden.

Die JP 59 014 932 beschreibt eine Vorrichtung zur Verarbeitung eines reaktiven Materials, wobei Mischköpfen verschiedene Komponenten über Justierventile zugeführt wird.

Aus der EP 108 287 ist eine Vorrichtung zum Dosieren und Mischen bekannt, bei der einem Mischkopf zwei reaktive Ausgangskomponenten zugeführt werden, die bei gestopptem Austrag jeweils über Rezirkulationsleitungen zurückgeführt werden.

Aufgabe der vorliegenden Erfindung ist es, ein Formwerkzeug anzugeben, mit dem insbesondere in eine vergrößerte Kavität eingelegte Produkte überflutet bzw. beschichtet werden können.

Diese Aufgabe wird durch die im Anspruch 1 genannten Merkmale gelöst.

Dabei ist ein Kerngedanke der vorliegenden Erfindung darin zu sehen, dass ein Injektor in ein Formwerkzeug zumindest teilweise integriert ist, wobei in dem geschlossenen Formwerkzeug eine vollständig gegenüber der Außenumgebung abgeschlossene Kavität ausgebildet bzw. ausbildbar ist. Dabei mündet die Austragsöffnung des Injektors unmittel oder mittelbar in die abgeschlossene Kavität. Der Injektor ist dabei so ausgebildet, dass er sowohl in einem Einspritzbetrieb wie auch in einem Rezirkulationsbetrieb betrieben werden kann. Dabei sind ein Materialzufuhrkanal und ein Materialrückflusskanal über einen Verbindungsraum strömungsmäßig miteinander verbunden. Ist nun eine Injektornadel des Injektors in einer geöffneten Position angeordnet, beispielsweise zurückgezogen, so ist der Verbindungsraum mit der Austrittsöffnung strömungsmäßig verbunden, und das Beschichtungsmaterial kann über den Materialzufuhrkanal, den Verbindungsraum und die Austragsöffnung in die Kavität (beispielsweise für die Überflutung) gelangen. In einer Geschlossen-Stellung, bei der die Spitze der Injektornadel auf der Austragsöffnung aufsitzt, beaufschlagt die Injektornadel die Austragsöffnung und verschließt diese, so dass nunmehr das Material über den Materialrückflusskanal zu einem Behälter zurückfließt.

Gemäß einer vorteilhaften Ausführungsform ist in der Versorgungsleitung stromabwärts des Injektors ein schaltbares Ventil angeordnet. Ist dieses schaltbare Ventil geschlossen, so kann das Material lediglich über einen geöffneten Injektor austreten. Ist die Injektornadel in der Verschlussposition und das Ventil stromabwärts des Injektors geöffnet, so ist eine Rezirkulation des Materials zurück zu dem Behälter möglich.

Eine Rezirkulation ist insbesondere dann nützlich, wenn als Beschichtungsmaterial ein reaktives oder vernetzendes Material verwendet wird, welches ohne Rezirkulation die Düsen verstopfen könnte.

Zwar ist es prinzipiell möglich, dass das Material durch einen Unterdruck, beispielsweise durch ein sogenanntes Vakuumflutungsverfahren in die Kavität hineingezogen wird. Allerdings ist es sicherlich von Vorteil, wenn das Material für die Überflutung bzw. Beschichtung auch mit Druck beaufschlagt ist. Dazu könnte eine Pumpe strömungsmäßig vor dem Injektor vorgesehen sein.

Eine relativ simple Möglichkeit ist die Realisierung der Pumpe als Kolbenpumpe mit einem einzigen Kolben, der in eine Zylinderanordnung eintaucht. Gemäß einer bevorzugten Ausführungsform wird der Kolben durch einen Elektromotor unter Zwischenschaltung einer Spindel-Mutter-Kombination angetrieben. Durch den Betrieb des Motors kann auch die in die Kavität eingebrachte Menge gesteuert werden.

Wird strömungsmäßig vor der Pumpe in der Versorgungsleitung ein weiteres Ventil angeordnet, so kann durch abwechselndes Schalten der Ventile sowie Öffnen des Injektors auf einfache Weise zwischen dem Rezirkulationsbetrieb und dem Einspritzbetrieb umgeschaltet werden. Dies wird genauer noch in dem Ausführungsbeispiel beschrieben.

Der Injektor ist vorteilhafterweise in einem Basisgehäuse aufgenommen und gehalten, welches am Formwerkzeug und/oder an der Aufspannplatte befestigt ist. Damit lässt sich das Formwerkzeug sozusagen integral mit dem Injektor ausbilden, so dass Formwerkzeug und Injektor eine Einheit bilden. Das Basisgehäuse kann ein- oder mehrteilig ausgebildet sein. Auch ist es möglich, verschiedene Gehäuse für verschiedene Einheiten vorzusehen, beispielsweise ein Gehäuse für den Injektor und ein Gehäuse für die Pumpen-Ventil-Kombination.

Eine besonders kompakte Bauweise ist dann erreicht, wenn ein Teil der Pumpe wie auch die Zuführleitungen und die schaltbaren Ventile zumindest teilweise im Basisgehäuse integriert sind.

Je nach verwendetem Material ist es möglicherweise nützlich oder sogar notwendig, den Injektor selbst zu temperieren, beispielsweise zu kühlen oder zu heizen. Dazu weist der Injektor entsprechende Temperierkanäle sowie Anschlüsse für das Temperiermedium auf, die mit diesen Temperierkanälen verbunden sind.

Eine besonders bevorzugte Ausführungsform ist dadurch gekennzeichnet, dass zwischen dem Injektor und dem Formwerkzeug ein Temperierelement, beispielsweise ein Kühlelement zwischengeschaltet sein. Als solches Temperierelement ist beispielsweise ein Peltierelement möglich, dass auf der einen Seite den Injektor kühlt und auf der anderen Seite das Werkzeug heizt. Beide Funktionen, also sowohl das Kühlen wie auch das Heizen wirken sich besonders optimal aus. Das Kühlen führt dazu das bestimmte zu verwendende Materialien im Injektor möglichst nicht ausreagieren. Andererseits führt das Heizen der Form dazu, dass der Reaktions- oder Härtungsprozess in der Kavität möglichst schnell abläuft. Auch ist es möglich, mehrere Peltierelemente sozusagen in Reihe hintereinander zu schalten, so dass die Temperaturdifferenz zwischen der kalten und er heißen Seite groß gewählt werden kann.

Gemäß einer bevorzugten Ausführungsform der Erfindung ist die Injektionsnadel so ausgestaltet, dass in der Verschlussposition die Stirnseite der Spitze der Injektionsnadel bündig mit der Kavitätsoberfläche abschließt und sozusagen einen Teil dieser Kavitätsoberfläche bildet.

Eine konkrete Ausführungsform der vorliegenden Erfindung wird nachfolgend anhand beigefügter Zeichnungen näher erläutert. Die Zeichnungen zeigen in
- Figur 1: eine schematische Seitenansicht eines mit einem teilweise dargestellten Formwerkzeug integrierten Injektors,
- Figur 2: eine schematische Schnittdarstellung entlang der Linie B-B aus Figur 3,
- Figur 3: eine Draufsicht auf einen Injektor wie in Figur 1 dargestellt,
- Figur 4: einen Schnitt gemäß Linie D-D aus Figur 1,
- Figur 5: ein Flussdiagramm bei dem in den Figuren 1 bis 4 dargestellten Injektor und
- Figur 6: eine vergrößerte Teilschnitt-Darstellung der einer Ausführungsvariante der Düsenspitze.

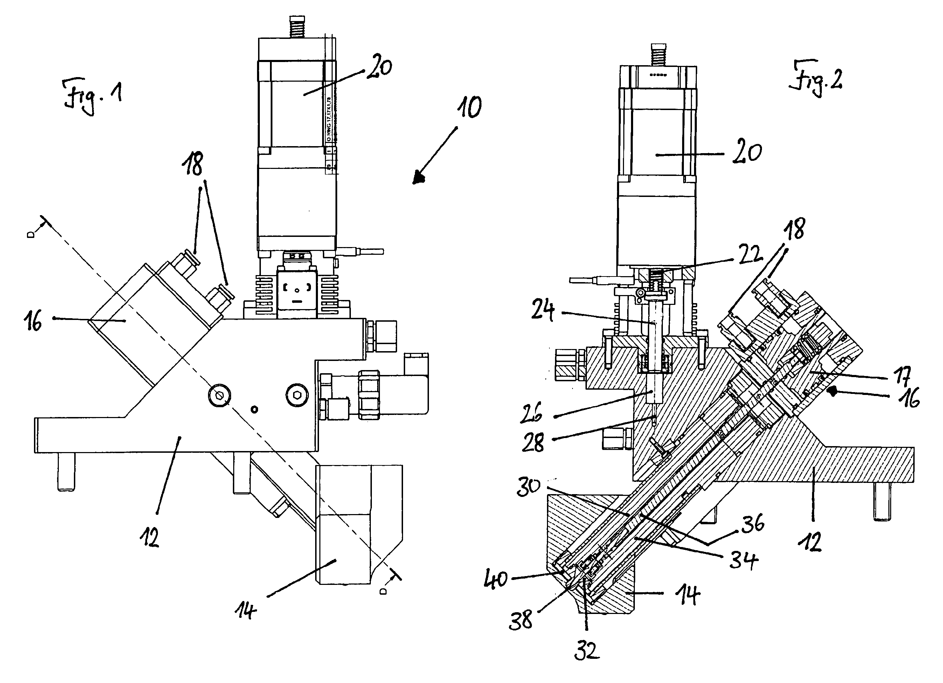

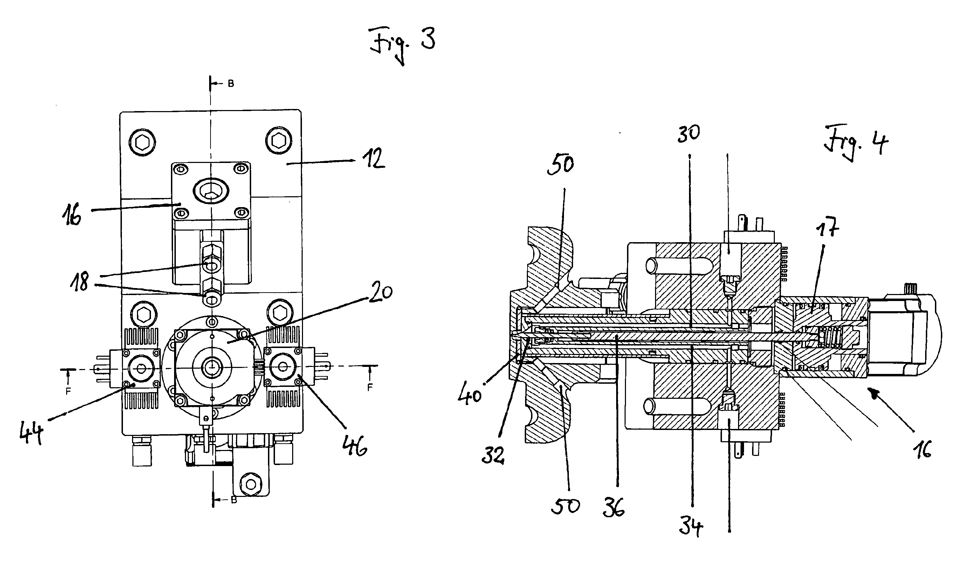

In den Figuren 1 bis 4 ist eine Basisplatte 12 zu erkennen, in der ein Injektor 16 in einer Öffnung passgenau und entsprechend abgedichtet fest aufgenommen ist. Der Injektor 16 umfasst ein im Wesentlichen zylindrisches Gehäuse mit einem stirnseitig angeordneten Antriebsblock, in dem ein Kolben 17 mittels eines Fluid betätigbar hin und her verschiebbar ist. Das Fluid wird über die beiden Fluidanschlüsse 18 zugeführt. Je nach Beaufschlagung kann der Kolben zwischen zwei Extrempositionen hin und her bewegt werden. In Fig. 2 ist zu erkennen, dass im Antriebsbereich des Injektors der Kolben federbeaufschlagt ist, Mit dieser Feder bzw. der ebenfalls dargestellten Schraube (Madenschraube) kann die Vorspannung für die Injektornadel eingestellt werden.

Der Kolben 17 ist unmittelbar verbunden mit einer Injektornadel 36, die unter Betätigung des Kolbens 17 ebenfalls in zwei Positionen verschoben werden kann. Parallel zum Kolben verläuft innerhalb des Gehäuses des Injektors 16 zum einen eine Materialzufuhrbohrung 30 sowie eine Materialrückführbohrung 34, die im vorderen Bereich jeweils in einen Verbindungsraum 32 münden, über den eine Strömungsverbindung zwischen den beiden Kanälen 30 und 34 hergestellt ist. Die Injektornadel 36 ragt durch diesen Verbindungsraum 32 hindurch, und deren Spitze 38 sitzt in ihrem vorgefahrenen Zustand auf einer Austragsöffnung, die in geöffnetem Injektornadelzustand eine unmittelbare Verbindung zum Verbindungsraum 32 aufweist. Wie insbesondere in Figur 2 zu erkennen ist, ragt der vordere Teil des Injektors 16 in ein hier nur teilweise dargestelltes Formwerkzeug 14 hinein und endet unweit der Kavitätsoberfläche, wobei die Austragsöffnung in die geschlossene, aber nicht weiter dargestellte Kavität mündet.

Um eine Kühlung des Injektors 16 erreichen zu können, ist der Injektor mit Kühlkanälen durchsetzt, die vorliegend nicht weiter dargestellt sind. Ebenfalls zur Kühlung ist zwischen dem vorderen Ende des Injektors 16 und dem Formwerkzeug 14 ein scheibenförmiges Peltier-Element 40 angeordnet, welches unter entsprechender elektrischer Beaufschlagung injektorseitig kühlt und werkzeugseitig heizt. Soll die Temperaturdifferenz zischen heißer und kalter Seite höher gewünscht sein, so ist es auch möglich mehr als ein Peltier-Element 40 anzuordnen und diese temperaturmäßig sozusagen in Reihe zu schalten.

Auf dem Basisgehäuse 12 sind zum einen zwei Elektro-Ventile 44 und 46 sowie dazwischen eine Kolbenpumpe 20 angeordnet. Die Kolbenpumpe 20 ist zusammen mit der entsprechenden Ausgestaltung der Basisplatte 12 definiert. Deren Funktionsweise geht insbesondere aus Figur 2 hervor. Die Kolbenpumpe 20 weist nämlich im oberen Bereich einen Elektromotor auf, der eine Spindel 22 drehmäßig antreibt. Unter Zwischenschaltung einer Mutter wird die Rotationsbewegung in eine axiale Vorschub- oder Rückzugsbewegung umgewandelt, so dass ein mit der Spindel verbundener Kolben 24 in eine passgenaue Ausnehmung 26 des Basisgehäuses hinein verfährt oder aus dieser heraus verfährt. Der Kolben 24 und die Ausnehmung 26 definieren eine Kolbenzylinderfunktion. Über den Zu- und Abführkanal 28 kann das Beschichtungsmaterial sowohl in den Zylinderraum 26 gelangen (eingesaugt) bzw. aus diesem verdrängt werden. Die genaue Funktionsweise wird später noch anhand dem Strömungs- und Flussdiagramm erläutert.

Das Basisgehäuse 12 zusammen mit den darauf angeordneten Bauteilen und dem Injektor 16 bildet die Flutungseinheit 10.

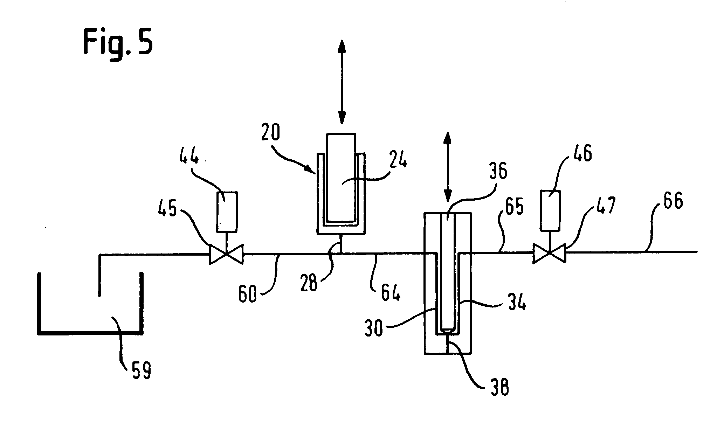

Überdies ist - in den Figuren nicht im Einzelnen dargestellt (vgl. jedoch Flussplan in Fig. 5) - die Leitung 28 mit der Materialzuführleitung 30 verbunden. Ferner besteht eine Strömungsverbindung zwischen dem Ventil 45 sowie der Kolbenpumpe 20 und schließlich auch zwischen dem Injektor und dem Ventil 47. Das Ventil 45 ist mit einem Behälter 59 über eine Leitung verbunden, und die vom Ventil 47 wegführende Leitung 66 ist ebenfalls wieder zum Behälter 59 zurückgeführt.

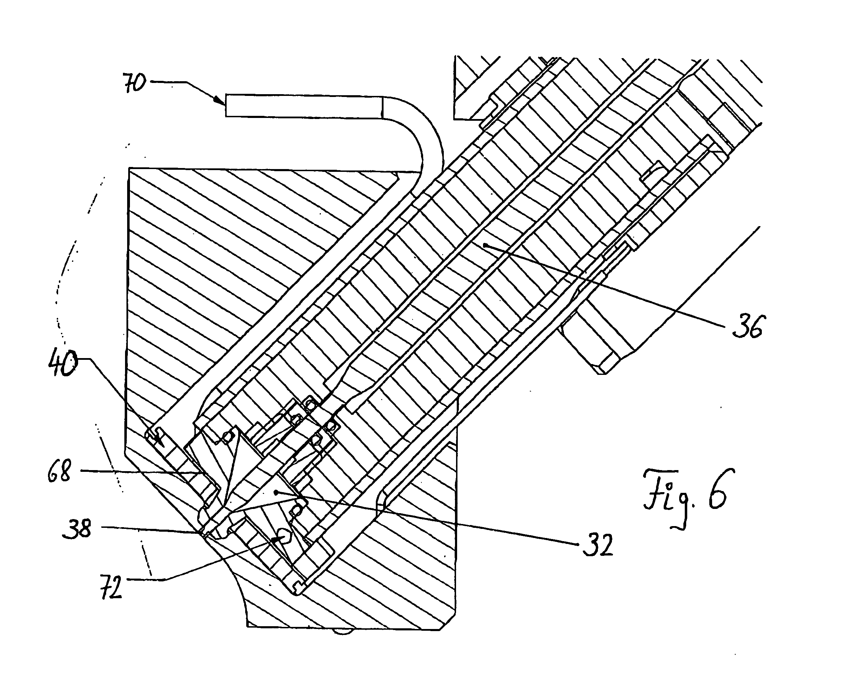

Gemäß der in Fig. 6 gezeigten Ausführungsform ist das Peltier-Element auf seiner Kalt-Seite vom Injektor geringfügig beabstandet und liegt lediglich an seiner Warmseite werkzeugseitig an. Überdies sind im Bereich der Spitze des Injektors Kühlkanäle eingearbeitet, von denen in Fig. 6 lediglich einer mit der Bezugsziffer 72 gezeigt ist. Diese Kühlkanäle werden über eine Kühlmittelzufuhr 70 mit einem Kühlmittel, vorzugsweise Wasser, beaufschlagt. Werden mehrere Kühl- oder Temperierkanäle in der Injektorspitze oder dem übrigen Injektor angeordnet, so können diese eigenständig mit Temperiermedium versorgt werden. Es hat sich in Versuchen gezeigt, dass es vorteilhaft ist, die Düsenspitze mit einer Kühlung (evtl. einer separaten Kühlung) zu versehen, da ansonsten die Gefahr besteht, dass das verwendete Material, beispielsweise ein Acryl-Material im Bereich der Nadelspitze ausreagiert.

Die Funktionsweise der Vorrichtung ist nun denkbar einfach.

Ist der Injektor 16 durch die vorverfahrene Düsennadel 36 geschlossen und ist auch das Ventil 47 geschlossen, kann bei geöffnetem Ventil 45 und einem Zurückziehen des Kolbens 24 das Beschichtungsmaterial aus dem Behälter 59 über die Leitung 60 in den Zylinderraum 26 eingesaugt werden. Nunmehr wird das Ventil 45 geschlossen.

Je nachdem, ob nun ein Einspritz- oder Rezirkulationsschritt durchgeführt werden soll, wird entweder der Injektor 16 durch Rückverfahren der Injektornadel 36 geöffnet oder aber es wird das Ventil 47 durch entsprechende Beaufschlagung des Elektromagneten 46 geöffnet.

Im ersten Fall, nämlich bei geschlossenem Ventil 47 und geöffnetem Injektor, wird beim Nach-unten-Verfahren des Kolbens 24 das in dem Zylinderraum 26 befindliche Material über die Leitungen 28 und 64 sowie die Materialzufuhrleitung 30 und den Verbindungsraum 32 wie auch die Auftragsöffnung in die Kavität eingespritzt. Ist der Einspritzvorgang beendet, so wird der Injektor 10 durch das Nach-vorne-Verfahren der Injektornadel verschlossen. Nun kann das restliche Material in dem Zylinderraum 26 bei geöffnetem Ventil 47 über die Rückführleitung 34 und die Leitungen 65 und 66 wieder zum Behälter 59 zurückgeführt werden. Ist der Injektor länger geschlossen, so kann die Pumpe 20 weiterhin bei abwechselndem Öffnen der Ventile 45 und 47 betrieben werden, so dass ein ständiger Rezirkulationsfluss gegeben ist.

Dies erlaubt insgesamt eine sehr einfache Ausgestaltung eines Injektors für ein vernetzendes oder reaktives Material. Überdies ist die Einspritzdüse bzw. der Injektor in dem Formwerkzeug integriert.

### Bezugszeichenliste

- 10: Flutungseinheit
- 12: Basisgehäuse
- 14: Werkzeug (teilweise)
- 16: Injektor
- 17: Injektorkolben
- 18: Anschlüsse für Arbeitsfluid
- 20: Pumpe
- 22: Spindel
- 24: Kolben
- 26: Ausnehmung oder Zylinder der Pumpe
- 28: Zu- und Abfluss zur Ausnehmung oder dem Pumpzylinder
- 30: Materialzufuhrkanal im Injektor
- 32: Verbindungskammer
- 34: Materialrückführkanal
- 36: Injektornadel
- 38: Nadelspitze
- 40: Peltier-Element
- 44: Gehäuse erstes Elektro-Ventil
- 45: erstes Elektro-Ventil
- 46: Gehäuse zweites Elektro-Ventil
- 47: zweites Elektro-Ventil
- 59: Behälter
- 60: Leitung zwischen erstem Elektro-Ventil und Pumpe
- 64: Leitung zwischen Pumpe und Injektor
- 65: Leitung zwischen Injektor und zweitem Elektro-Ventil
- 66: Rückleitung zum Aufbewahrungsgefäß
- 68: Abstand
- 70: Kühlmittelzufuhr
- 72: Bohrung für Kühlmittel in der Injektorspitze

## Patentansprüche

1. Formwerkzeug, in dem in einem Betriebszustand eine vollkommen geschlossene Kavität ausbildbar ist, mit
einem Injektor (10), der zumindest teilweise in dem Formwerkzeug (14) aufgenommen ist, dessen Austragsöffnung in die geschlossene Kavität mündet und der einen Materialzufuhrkanal- (30) und einen Materialrückflusskanal (34) aufweist, und
einer Injektornadel (36), die in zumindest zwei Betriebspositionen schaltbar ist, wobei in einer Betriebsposition die Austragsöffnung mittels der auf der Austragsöffnung aufsitzenden Spitze (38) der Injektornadel (36) verschlossen ist und in der anderen Betriebsposition durch Abheben der Injektornadel von der Austragsöffnung die Austragsöffnung eine Strömungsverbindung mit einem Verbindungsraum aufweist und der Injektor (10) damit geöffnet ist,
**dadurch gekennzeichnet, dass**
dass beide Kanäle (30, 34) im Bereich der Spitze des Injektors (10) in den Verbindungsraum (32) münden und über diesen Verbindungsraum (32) miteinander in Strömungsverbindung stehen.

2. Formwerkzeug nach Anspruch 1,
**dadurch gekennzeichnet,**
**dass** strömungsmäßig nach dem Material-Rückflusskanal (36) in der Versorgungsleitung (65, 66) ein schaltbares Ventil (46, 47) vorgesehen ist.

3. Formwerkzeug nach Anspruch 1 oder 2,
**dadurch gekennzeichnet,**
**dass** strömungsmäßig vor dem Materialzufuhrkanal (30) eine Pumpe (20) vorgesehen ist.

4. Formwerkzeug nach Anspruch 3,
**dadurch gekennzeichnet,**
**dass** die Pumpe als Kolbenpumpe (20) realisiert ist.

5. Formwerkzeug nach Anspruch 4,
**dadurch gekennzeichnet,**
**dass** der Kolben (24) durch eine von einem Elektromotor angetriebenen Spindel-Mutter-Kombination (22) betätigt wird.

6. Formwerkzeug nach einem der Ansprüche 2 bis 5,
**dadurch gekennzeichnet,**
**dass** strömungsmäßig vor der Pumpe (20) in der Versorgungsleitung (60) ein schaltbares Ventil (44, 45) vorgesehen ist.

7. Formwerkzeuge nach einem der Ansprüche 2 bis 6,
**dadurch gekennzeichnet,**
**dass** die Ventile (44, 45; 46, 47) elektrisch, pneumatisch oder hydraulisch schaltbar sind.

8. Formwerkzeug nach einem der vorhergehenden Ansprüche,
**dadurch gekennzeichnet,**
**dass** der Injektor in einem Basisgehäuse (12) gehalten ist und das Basisgehäuse (12) am Formwerkzeug (14) und/oder an einer Aufspannplatte befestigt ist.

9. Formwerkzeug nach Anspruch 8,
**dadurch gekennzeichnet,**
**dass** die Pumpe (20) sowie die Zufuhrleitung (64) zum Materialzufuhrkanal (30) im Basisgehäuse (12) ausgebildet sind.

10. Formwerkzeug nach Anspruch 8 oder 9,
**dadurch gekennzeichnet,**
**dass** die schaltbaren Ventile (45, 47) im Basisgehäuse (12) integriert sind.

11. Formwerkzeug nach einem der vorhergehenden Ansprüche,
**dadurch gekennzeichnet,**
**dass** der Injektor (10) gekühlt ist.

12. Formwerkzeug nach einem der vorhergehenden Ansprüche,
**dadurch gekennzeichnet,**
**dass** zwischen Injektor (10) und Formwerkzeug (14) ein Kühlelement (40) zwischengeschaltet ist.

13. Formwerkzeug nach Anspruch 12,
**dadurch gekennzeichnet,**
**dass** das Kühlelement ein Peltierelement (40) ist.

14. Formwerkzeug nach einem der Ansprüche 12 oder 13,
**dadurch gekennzeichnet,**
**dass** das Kühlelement von dem Injektor(10) zumindest geringfügig beabstandet ist.

15. Formwerkzeug nach einem der Ansprüche 12 bis 14,
**dadurch gekennzeichnet,**
**dass** in der Injektorspitze zumindest ein Kühlkanal angeordnet sind.

16. Formwerkzeug nach Anspruch 15,
**dadurch gekennzeichnet,**
**dass** der zumindest eine Kühlkanal in der Injektorspitze eigenständig mit einem Kühlmittel beaufschlagbar ist.

17. Formwerkzeug nach einem der Ansprüche 12 bis 16,
**dadurch gekennzeichnet,**
**dass** die Kühlung mit einem Kühlmittel als Wasserkühlung ausgebildet ist.

18. Formwerkzeug nach einem der vorhergehenden Ansprüche,
**dadurch gekennzeichnet,**
**dass** die Spitze (38) der Injektionsnadel (36) in der Verschlussposition die Austragsöffnung bündig mit der Kavitätsoberfläche abschließt.

## Claims

1. A mould, in which a completely closed cavity can be formed in one operating state, with
an injector (10), which is accommodated at least partially in the mould (14), the discharge opening of which opens into the closed cavity and which has a material feed duct (30) and a material return-flow duct (34), and
an injector needle (36) which is able to be switched into at least two operating positions, wherein in one operating position the discharge opening is closed by means of the tip (38) of the injector needle (36) sitting on the discharge opening and in the other operating position by lifting the injector needle from the discharge opening, the discharge opening has a flow connection with a connecting chamber, and the injector (10) is thereby opened,
**characterized in that**
both ducts (30, 34) open in the region of the tip of the injector (10) into the connecting chamber (32) and are in flow connection with each other via this connecting chamber (32).

2. The mould according to Claim 1, **characterized in that** a switchable valve (46, 47) is provided in the supply line (65, 66) downstream of the material return-flow duct (36) with regard to flow.

3. The mould according to Claim 1 or 2, **characterized in that** a pump (20) is provided upstream of the material feed duct (30) with regard to flow.

4. The mould according to Claim 3, **characterized in that** the pump is realized as a piston pump (20).

5. The mould according to Claim 4, **characterized in that** the piston (24) is actuated by a spindle-nut combination (22) which is driven by an electric motor.

6. The mould according to one of Claims 2 to 5, **characterized in that** a switchable valve (44, 45) is provided in the supply line (60) upstream of the pump (20) with regard to flow.

7. The mould according to one of Claims 2 to 6, **characterized in that** the valves (44, 45; 46, 47) are switchable electrically, pneumatically or hydraulically.

8. The mould according to one of the preceding claims, **characterized in that** the injector is held in a base housing (12), and the base housing (12) is fastened to the mould (14) and/or to a clamping plate.

9. The mould according to Claim 8, **characterized in that** the pump (20) and the supply line (64) to the material feed duct (30) are constructed in the base housing (12).

10. The mould according to Claim 8 or 9, **characterized in that** the switchable valves (45, 47) are integrated in the base housing (12).

11. The mould according to one of the preceding claims, **characterized in that** the injector (10) is cooled.

12. The mould according to one of the preceding claims, **characterized in that** a cooling element (40) is intercalated between the injector (10) and the mould (14).

13. The mould according to Claim 12, **characterized in that** the cooling element is a Peltier element (40).

14. The mould according to one of Claims 12 or 13, **characterized in that** the cooling element is spaced at least slightly apart from the injector (10).

15. The mould according to one of Claims 12 to 14, **characterized in that** at least one cooling duct is arranged in the injector tip.

16. The mould according to Claim 15, **characterized in that** the at least one cooling duct in the injector tip is able to be acted upon independently by a coolant.

17. The mould according to one of Claims 12 to 16, **characterized in that** the cooling with a coolant is formed as a water cooling.

18. The mould according to one of the preceding claims, **characterized in that** the tip (38) of the injection needle (36) in the closure position closes off the discharge opening flush with the cavity surface.

## Revendications

1. Moule dans lequel, dans un état de fonctionnement, une cavité entièrement fermée peut être formée, comprenant
un injecteur (10) qui est reçu au moins partiellement dans le moule (14), dont l'ouverture de décharge débouche dans la cavité fermée et qui présente un canal d'amenée de matériau (30) et de retour de matériau (34) et
une aiguille d'injecteur (36) qui peut être mise dans au moins deux positions de fonctionnement, sachant que dans une position de fonctionnement, l'ouverture de décharge est fermée au moyen de la pointe (38) de l'aiguille d'injecteur (36) reposant sur l'ouverture de décharge, et dans l'autre position de fonctionnement, l'ouverture de déchargeprésente une liaison d'écoulement avec un espace de liaison en soulevant l'aiguille d'injecteur, ouvrant ainsi l'injecteur (10),
**caractérisé en ce que** les deux canaux (30, 34) débouchent au niveau de la pointe de l'injecteur (10) dans l'espace de liaison (32) et restent enliaison d'écoulement l'un avec l'autre par cet espace de liaison (32).

2. Moule selon la revendication 1, **caractérisé en ce que** fluidiquement, une vanne commutable (46, 47) est placée après le canal de retour de matériau (36) dans le conduit d'alimentation (65, 66).

3. Moule selon la revendication 1 ou 2, **caractérisé en ce que** fluidiquement, une pompe (20) est prévue avant le canal d'amenée de matériau (30).

4. Moule selon la revendication 3, **caractérisé en ce que** la pompe est réalisée en tant que pompe à piston (20).

5. Moule selon la revendication 4, **caractérisé en ce que** le piston (24) est actionné par une combinaison tige-écrou (22) entraînée par un moteur électrique.

6. Moule selon l'une des revendications 2 à 5, **caractérisé en ce que** fluidiquement, une vanne commutable (44, 45) est prévue avant la pompe (20) dans le conduit d'alimentation (60).

7. Moule selon l'une des revendications 2 à 6, **caractérisé en ce que** les vannes (44, 45 ; 46, 47) peuvent être commutées de manière électrique, pneumatique ou hydraulique.

8. Moule selon l'une des revendications précédentes, **caractérisé en ce que** l'injecteur est tenu dans un boîtier de base (12) et que le boîtier de base (12) est fixé sur le moule (14) et/ou sur une plaque de serrage.

9. Moule selon la revendication 8, **caractérisé en ce que** la pompe (20) ainsi que le conduit d'arrivée (64) vers le canal d'amenée de matériau (30) sont formés dans le boîtier de base (12).

10. Moule selon la revendication 8 ou 9, **caractérisé en ce que** les vannes commutables (45, 47) sont intégrées dans le boitier de base (12).

11. Moule selon l'une des revendications précédentes, **caractérisé en ce que** l'injecteur (10) est refroidi.

12. Moule selon l'une des revendications précédentes, **caractérisé en ce qu'**un élément de refroidissement (40) est prévu entre l'injecteur (10) et le moule (14).

13. Moule selon la revendication 12, **caractérisé en ce que** l'élément de refroidissement est un élément à effet Peltier (40).

14. Moule selon l'une des revendications 12 ou 13, **caractérisé en ce que** l'élément de refroidissement est au moins légèrement éloigné de l'injecteur (10).

15. Moule selon l'une des revendications 12 à 14, **caractérisé en ce qu'**au moins un canal de refroidissement est disposé dans la pointe d'injecteur.

16. Moule selon la revendication 15, **caractérisé en ce que** l'au moins un canal de refroidissement dans la pointe d'injecteur peut être alimenté de manière autonome en réfrigérant.

17. Moule selon l'une des revendications 12 à 16, **caractérisé en ce que** le refroidissement avec un réfrigérant est conçu en tant que refroidissement par eau.

18. Moule selon l'une des revendications précédentes, **caractérisé en ce que** la pointe (38) de l'aiguille d'injecteur (36) ferme l'ouverture de décharge en alignement avec la surface de la cavité,dans la position fermée.
